# EUROPÄISCHE PATENTSCHRIFT

(11) **EP 2 329 996 B1**
(45) Veröffentlichungstag und Bekanntmachung des Hinweises auf die Patenterteilung: **28.08.2013**
(21) Anmeldenummer: 10178753.9
(22) Anmeldetag: 23.09.2010
(51) Int. Cl.: B60R 21/13

(54) **Überrollkörperantriebseinheit zur Verlagerung eines Überrollkörpers aus einer Lagerungsposition in eine Überschlagsposition sowie ein Überrollschutzsystem für Kraftfahrzeuge**
Roll-bar drive unit for displacing a roll-bar from a storage position into a rollover position and rollover protection for motor vehicles
Unité d'entraînement d'arceau de sécurité pour le logement d'un arceau de sécurité à partir d'une position de logement dans une position de renversement et système de protection contre les tonneaux pour véhicules automobiles

(43) Veröffentlichungstag der Anmeldung: 08.06.2011
(73) Patentinhaber: ISE Automotive GmbH, 51702 Bergneustadt (DE)
(72) Erfinder: Beki, Gürkan, 51766 Engelskirchen (DE); Frei, Evgenija, 51674 Gummersbach (DE); Hellweg, Hans-Bernd, 53819 Neunkirch-Seelscheid (DE); Nass, Michael, 51702 Bergneustadt (DE)
(74) Vertreter: Kalkoff & Partner

(56) Entgegenhaltungen:
- EP-A1- 0 657 326
- EP-A1- 2 216 209
- EP-A2- 1 757 497
- EP-A2- 2 006 164
- WO-A1-2007/113303
- DE-A1- 19 501 522
- DE-A1- 19 960 764

## Beschreibung

Die Erfindung betrifft eine Überrollkörperantriebseinheit zur Verlagerung eines Überrollkörpers aus einer Lagerungsposition in eine Überschlagsposition mit einem einen Druckraum aufweisenden Gehäuse mit einem Führungsabschnitt, einem Antriebskörper mit einem mit dem Überrollkörper verbindbaren Verbindungsbereich und einem an dem Führungsabschnitt verschiebbar angeordneten Kopplungsbereich und einem mit dem Druckraum in Wirkverbindung stchenden Gasgenerator. Ferner betrifft die Erfindung ein Überrollschutzsystem für Kraftfahrzeuge, mit einem zwischen einer Lagerungsposition und einer Überschlagsposition verstellbaren Überrollkörper und einer den Überrollkörper im Bedarfsfall aus der Lagerungsposition in die Überschlagsposition verstellenden Antriebseinheit.

Überrollschutzsysteme dienen bei Fahrzeugen ohne ein starres Dach, wie Cabriolets oder Roadstern zum Schutz der Insassen im Falle eines Überschlags der Fahrzeuge. Die Überrollkörper der Überrollschutzsysteme spannen dabei mit dem Windschutzscheibenrahmen einen Überlebensraum für die Fahrzeuginsassen auf.

Neben starr am Fahrzeug angeordneten Überrollbügeln, welche sich sowohl über die gesamte Fahrzeugbreite erstrecken können, aber auch nur jeweils hinter einem Fahrzeugsitz angeordnet sind, haben sich mittlerweile sogenannte aktive Überrollschutzsysteme etabliert, bei denen der Überrollkörper im Normalzustand in einer von außen nicht sichtbaren Lagerungsposition angeordnet ist und erst im Bedarfsfall, nämlich bei einem drohenden Überschlag durch eine Antriebseinheit in die Überschlagsposition verlagert wird.

Neben bewährten, vorgespannten Federsystemen zur schlagartigen Verlagerung der Überrollkörper aus ihrer Lagerungsposition in eine Überschlagsposition, stellen sogenannte pyrotechnische Antriebseinheiten, bei denen die sich mit Auslösung der pyrotechnischen Einheit, bspw. einem Gasgenerator ergebende schlagartige Druckerhöhung dazu genutzt wird, um den Überrollkörperin die Überschlagsposition zu überführen, eine alternativeAntriebsmöglichkeit für die Überrollkörper dar. Eine derartigeAntriebseinheit ist beispielsweisc aus der DE 19501522 A1 bekannt. Zudem offenbaren die gattungsgemäβe WO 2007/113303, die DE 19960764 A1 und die EP 2216209 A1 Überrollsysteme, in denen der Überrollkörper im Überschlagfall mit Hilfe einer entsprechenden pyrotechnischen Antriebseinheit zugleich aus seiner Ruhelage entriegelbar und in eine Überschlagposition verstellbar ausgebildet ist. Die bekannten pyrotechnischen Antriebseinheiten weisen jedoch teilweise einen komplexen Aufbau auf, was hohe Fertigungs- und Montagekosten bedingt.

Hiervon ausgebend liegt der Erfindung die Aufgabe zugrunde, eine Antriebseinheit für einen Überrollkörper sowie ein Überrollschutzsystem bereitzustellen, die sich besonders kostengünstig herstellen lassen und eine hohe Zuverlässigkeit aufweisen.

Die Erfindung löst die Aufgabe durch eine Überrollkörperantriebseinheit mit den Merkmalen des Anspruchs 1 sowie ein Überrollschutzsystem mit den Merkmalen des Anspruchs 8. Vorteilhafte Weiterbildungen der Erfindung werden in den abhängigen Ansprüchen angegeben.

Die Überrollkörperantriebseinheit weist ein einen Führungsabschnitt aufweisendes Gehäuse sowie einen an dem Führungsabschnitt verschiebbar gelagerten Antriebskörper auf, welcher über einen Verbindungsberreich mit einem Überrollkörper gekoppelt werden kann. Zur Verlagerung des Antriebskörpers weist das Gehäuse einen Druckraum auf, der in Wirkverbindung mit einem Gasgenerator steht, so dass eine Auslösung des Gasgenerators eine schlagtartige Druckerhöhung im Druckraum bewirkt. Hierdurch wird der mit einem Kopplungsbereich an dem Führungsabschnitt des Gehäuses verschiebbar angeordnete Antriebskörper im Gehäuse angetrieben. Im Falle einer Verbindung mit dem Überrollkörper verlagert das sich im Druckraum expandierende Gas dann den Antriebskörper mit dem Überrollkörper aus seiner Lagerungsposition in die Überschlagsposition.

Erfindungsgemäß ist der Antriebskörper im unteren Bereich des Überrollkörpers mit diesem verbunden und wird nach Auslösen des Gasgenerators geführt durch den Führungsabschnitt von dem Gehäuse getrennt.

In der Ruhelage des Antriebskörpers, d. h. in einer nicht ausgelösten Position der Überrollkürperantriebseinheit ist der Kopplungsbereich des Antriebskörpers derart an dem Gehäuse bzw. an dem Führungsabschnitt des Gehäuses gelagert, dass der Druckraum durch den Antricbskörper weitestgehend gegenüber der Umgebung abgedichtet ist. Der Führungsabschnitt gewährleistet dabei eine lineare Verstellung des Antriebskörpers und so eine störungsfreie Verstellung des an dem Antriebskörper anordbaren Überrollkörpers aus der Lagerungsposition in die Überschlagsposition. Über die Überdeckung des Führungsabschnitts mit dem Kopplungsbereich kann dabei der Bereich festgelegt werden, in dem die Druckerhöhung im Druckraum eine Beschleunigung des Antriebskörpers bewirkt. Nachdem der Verstellweg des an dem Antriebskörper anordbaren Überrollkörpers aus der Lagerungsposition in die Überschlagsposition größer ist als der Überdeckungsgrad des Führungsabschnitts mit dem Kopplungsbereich, erfährt der Überrollkörper dabei erfingdungsgemäß eineTeilbeschleunigung, d. h. er wird nicht über den gesamten Verstellweg beschleunigt.

Die erfindungsgemäße Überrollkörperantriebseinheit zeichnet sich durch ihren geringen Bauraum sowie geringe Teilezahl auf, welche eine besonders kostengünstige Herstellung der Antriebseinheit ermöglicht. Über die grundsätzlich frei wählbare Ausgestaltung des Verbindungsbereichs des Antriebskörpers lässt sich die Überrollkörperantriebseinheit in einfacher Weise an einen Überrollkörper anschließen. Zur Verlagerung des Überrollkörpers im Überschlagsfall ist es lediglich erforderlich, den Gasgenerator auszulösen, wodurch der Antriebskörper, geführt durch den Führungsabschnitt, von dem Gehäuse entfernt wird und dabei den Überrollkörper verstellt.

Die Verbindung des Antriebskörpers mit dem Gehäuse derart, dass eine Erhöhung des Drucks im Druckraum zu einer Verstellung des Antriebskörpers führt, ist grundsätzlich frei wählbar. Bestimmend ist dabei die Anordnung und Ausgestaltung des Kopplungsbereichs sowie des Führungsabschnitts. Diese sind nach einer besonders vorteilhaften Ausgestaltung der Erfindung koaxial zueinander angeordnet. Diese Ausgestaltung der Erfindung ermöglicht eine besonders kompakte Bauweise der Überrollkörperantriebseinheit, wobei gleichzeitig eine zuverlässige Führung des Antriebskörpers über das Zusammenwirken des Kopplungsbereichs mit dem Führungsabschnitt erreicht werden kann. Die Länge des Zusammenwirkungsbereichs bestimmt dabei darüber hinaus die Wirkungsdauer des expandierenden Gases auf den Antriebskörper und somit im Falle einer Anordnung eines Überrollkörpers an dem Antriebskörper die Ausprägung der Teilbeschleunigung des Überrollkörpers.

Auch die Ausgestaltung der Verbindungsbereiche des Antriebskörpers und des Gehäuses, d. h. des Kopplungsbereichs sowie des Führungsabschnittes ist frei wählbar. So können diese bspw. derart bemessen sein, dass sie im Falle der Anordnung des Antriebskörpers an dem Gehäuse den Druckraum des Gehäuses weitestgehend gegenüber der Umgebung abdichten. Nach einer besonders vorteilhaften Ausgestaltung der Erfindung ist jedoch zwischen dem Kopplungsbereich und dem Führungsabschnitt ein den Druckraum abdichtendes Dichtelement, insbesondere ein O-Ring angeordnet. Die Verwendung eines Dichtelements ermöglicht es dabei, auf eine andernfalls zur Erreichung der notwendigen Dichtigkeit erforderliche Maßgenauigkeit zu verzichten, so dass eine kostengünstigere Herstellung der Bauteile der Überrollkörperantriebseinheit mit höheren Toleranzen möglich ist.

Insbesondere die vorteilhafterweise vorgesehene koaxiale Anordnung von Kopplungsbereich und Führungsabschnitt ermöglicht dabei die Verwendung standardisierter Dichtelemente in Form von O-Ringen, welche in ergänzender Weise eine kostengünstige Herstellung der Überrollkörperantriebseinheit ermöglichen. Über die Anordnung des O-Rings an dem Kopplungsbereich bzw. Führungsabschnitt kann dabei in relativ einfacher Weise der Bewegungsbereich des Antriebskörpers gegenüber dem Gehäuse bestimmt werden, in dem dieser aufgrund der sich einstellenden Druckerhöhung im Druckraum nach Auslösung des Gasgenerators beschleunigt wird, wobei hierdurch auch der Bereich festgelegt wird, über den ein am Antriebskörper angeordneter Überrollkörper teilbeschleunigt wird.

Nach einer weiteren Ausgestaltung der Erfindung ist ein Arretierungselement vorgesehen, das formschlüssig mit dem Antriebskörper und dem Gehäuse in Eingriff befindlich ist. Ein Arretierungselement, das derart ausgestaltet ist, dass es im Falle einer Druckerhöhung den Antriebskörper freigibt, erlaubt eine Sicherung des an dem Antriebskörper angeordneten Überrollkörpers in der Lagerungsposition, so dass der Überrollkörper gegen eine ungewollte Verstellung gesichert ist. Diese Ausgestaltung der Erfindung ermöglicht es somit, auf zusätzliche Arretierungsmittel zur Sicherung des Überrollkörpers in einer Lagerungsposition zu verzichten. Die sich aufgrund der Auslösung des Gasgenerators ergebende Antriebsenergie sichert dabei, dass die durch die Arretierungsmittel erreichte Verbindung zuverlässig aufgelöst wird, so dass der Überrollkörper in die Überschlagsposition verstellt werden kann.

Die Ausgestaltung des Arretierungselements kann dabei grundsätzlich frei gewählt werden, so ist bspw. die Verwendung von einfachen Scherbolzen oder federbelasteten Rastkörpern denkbar, welche den Antriebskörper an dem Gehäuse arretieren. Nach einer besonders vorteilhaften Ausgestaltung der Erfindung ist das Arretierungselement jedoch durch einen in einer Nut im Kopplungsbereich und einer Nut im Führungsabschnitt angeordneten Runddrahtsprengring gebildet. Ein Runddrahtsprengring lässt sich in besonderes einfacher und kostengünstiger Weise an der Überrollkörperantriebseinheit, bzw. dem Führungsabschnitt und dem Kopplungsbereich anordnen und ermöglicht somit eine kostengünstige Lagesicherung des Antriebskörpers an dem Verbindungsabschnitt.

Wie bereits eingangs dargestellt, ist die grundsätzliche Ausgestaltung des Kopplungsbereichs und des Führungsabschnitts frei wählbar. Nach einer besonders vorteilhaften Ausgestaltung der Erfindung ist der Kopplungsbereich des Antriebskörpers jedoch innerhalb des Führungsabschnitts angeordnet. Gemäß dieser Ausgestaltung der Erfindung wird der Kopplungsbereich des Antriebskörpers im Falle einer Auslösung des Gasgenerators im Inneren des Gehäuses, nämlich über den Führungsabschnitt beschleunigt. Der Führungsabschnitt richtet dabei den Antriebskörper nach Art eines Laufs aus und schießt den Antriebskörper aus dem Führungsabschnitt hinaus. Über den Überdeckungsbereich des Führungsabschnitts mit dem Kopplungsbereich, bzw. im Falle der Verwendung eines Dichtelements, bspw. eines O-Rings, über die Dauer dessen Anordnung innerhalb des Führungsabschnitts ist dabei die sich aus der Druckerhöhung ergebende Wirkungsdauer bestimmbar. Diese Ausgestaltung der Erfindung zeichnet sich dabei neben der besonders zuverlässigen Verlagerung des Antriebskörpers ferner durch ihren geringen Bauraum aus, der es ermöglicht, die Überrollkörperantriebseinheit in besonders kompakter Bauweise auszuführen. Besondersvorteilhafterweise weisen dabei der Führungsabschnitt und der Kopplungsbereich keinen grundsützlich möglichen polygonalen, sondern einen zylindrischen Querschnitt auf, sind insbesondere als Hohlzylinder ausgebildet.

Die Antriebseinheit des Überrollschutzsystems ist durch eine Überrollkörperantriebseinheit gebildet, die ein ein Druckraum aufweisenden Gehäuse mit einem Führungsabschnitt, einen Antriebskörper mit einem mit dem Überrollkörper verbindbaren Verbindungsbereich und einen an dem Führungsabschnitt verschiebbar angeordneten Kopplungsbereich und einen mit dem Druckraum in Wirkverbindung stehenden Gasgenerator aufweist. Der Gasgenerator kann dabei in beliebiger Weise an dem Gehäuse angeordnet werden. So ist es bspw. möglich, den Gasgenerator im Falle der Verwendung eines Kunststoffgehäuses in das Gehäuse einzuspritzen oder einzugießen.

Der Antriebskörper der Überrollkörperantriebseinheit ist derart mit dem Überrollkörper verbunden, dass eine Verstellung des Antriebskörpers eine entsprechend Verstellung des Überrollkörper bewirkt. Das Gehäuse hingegen ist gegenüber dem Überrollkörper festgelegt, so dass zuverlässig gewährleistet ist, dass im Falle einer Auslösung des Gasgenerators der Überrollkörper aufgrund einer Verstellung des Antriebskörpers in die Überschlagsposition verstellt wird. Der Überdeckungsgrad von Führungsabschnitt und Kopplungsbereich der Antriebseinheit bestimmt dabei den Umfang der Teilbeschleurzigung des Überrollkörpers, dessen Beschleunigung endet, wenn der Kopplungsbereich nicht mehr am Führungsabschnitt angeordnet ist.

Das erfindungsgemäße Überrollsehutzsystem zeichnet sich dabei durch seinen geringen Bauraum sowie hohe Funktionssicherheit aus. Aufgrund der Möglichkeit des vollständigen Verzichts auf bspw. eine Federvorspannung weist das erfindungsgemäße Überrollschutzsystem neben geringeren Herstellungskosten ferner noch ein geringeres Eigengewicht sowie eine hohe Funktionssicherheit auf.

Die Anordnung des Überrollkörpers an dem Antriebskörper ist dabei grundsätzlich frei wählbar. Nach einer besonders vorteilhaften Ausgestaltung der Erfindung ist der Verbindungsbereich des Antriebskörpers jedoch mit dem Überrollkörper formschlüssig verbunden, insbesondere verschraubt. Eine entsprechende Ausgestaltung der Erfindung zeichnet sich durch ihre hohe Funktionssicherheit aus und lässt sich überdies in besonders einfacher Weise herstellen. Auch besteht somit die Möglichkeit, ggfs. einen Austausch der Überrollkörperantriebseinheit oder des Überrollkörpers in einfacher Weise vorzunehmen.

Nach einer weiteren Ausgestaltung der Erfindung ist der Führungsabschnitt der Übcrrollkörperantriebseinheit in ein unteres Ende des Überrollkörpers eingeschoben. Demgemäß ist eine erfindungsgemäße Verbindung des Überrollkörpers mit dem Antriebskörper im unteren Bereich des Überrollkörpers gewährleistet. Eine entsprechende Anordnung der Überrollkörperantriebseinheit lässt sich in einfacher Weise realisieren und erlaubt überdies eine einfache Verbindung des Gasgenerators mit einer entsprechenden Sensorik- bzw. Steuereinheit. Die Einschiebbarkeit der Überrollkörperantriebseirihheit ermöglicht es darüber hinaus, das Überrollschutzsystem in besonders kompakter Bauweise auszuführen.

Ein Ausführungsbeispiel der Erfindung wird nachstehend mit Bezug auf die Zeichnungen näher erläutert. In den Zeichnungen zeigen:
- Fig. 1: eine perspektivische Ansicht einer Überrollkörperantriebseinheit mit einem halbtransparenten Gehäuse;
- Fig. 2: eine perspektivische Ansicht auf die Überrollkörperantriebseinheit von Fig. 1 an einem Überrollkörpers;
- Fig. 3: eine Ansicht eines Schnitts der Überrollkörperantriebseinheit am Überrollkörpers;
- Fig. 4a: eine perspektivische Ansicht auf ein Überrollschutzsystem in einer Lagerungsposition des Überrollkörpers mit einer Überrollkörperantriebseinheit von Fig. 1;
- Fig. 4b: eine Ansicht eines Schnitts des Überrollschutzsystems von Fig. 4a in einer Lagerungsposition des Überrollkörpers;
- Fig. 5a: eine perspektivische Ansicht des Überrollschutzsystems von Fig. 4a in einer Über-schlagsposition des Überrollkörpers und
- Fig. 5b: eine Seitenansicht des Überrollschutzsystems von Fig. 4a in der Überschlagsposition des Überrollkörpers.

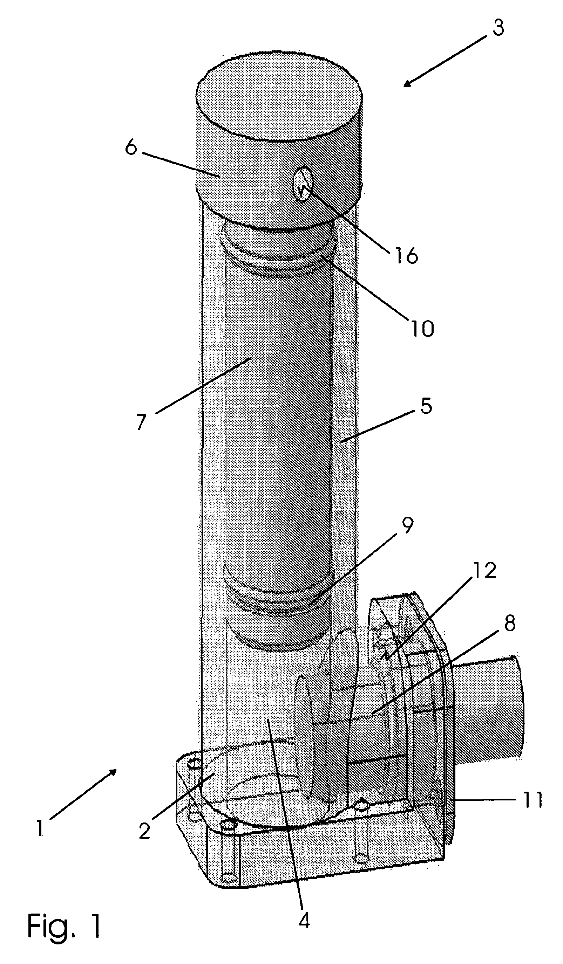

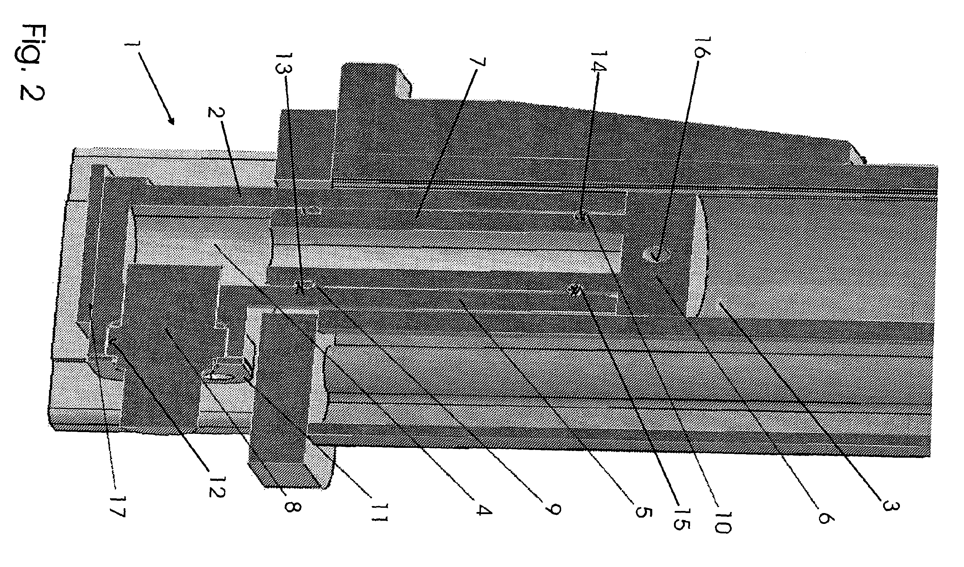

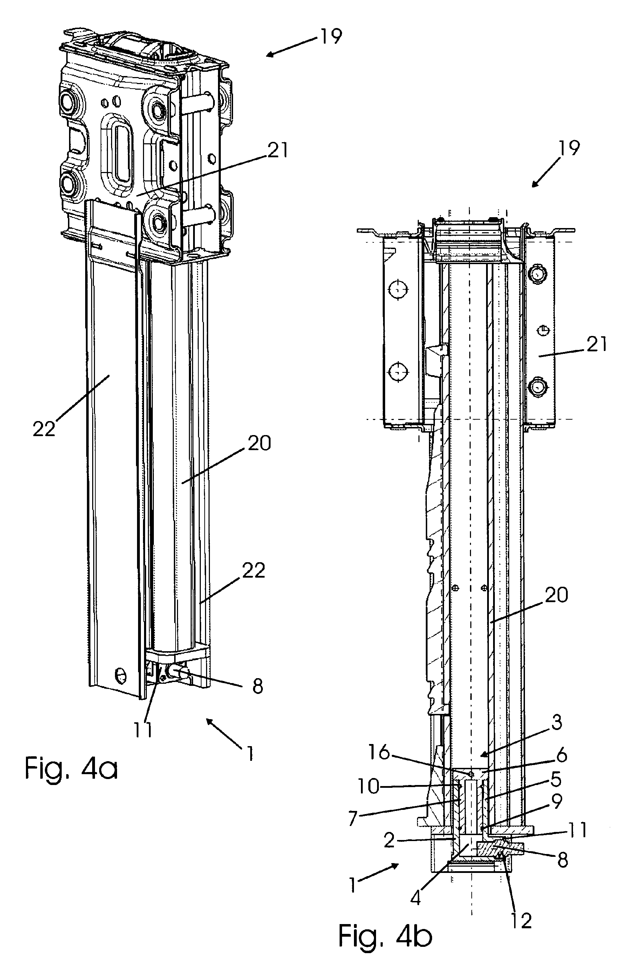

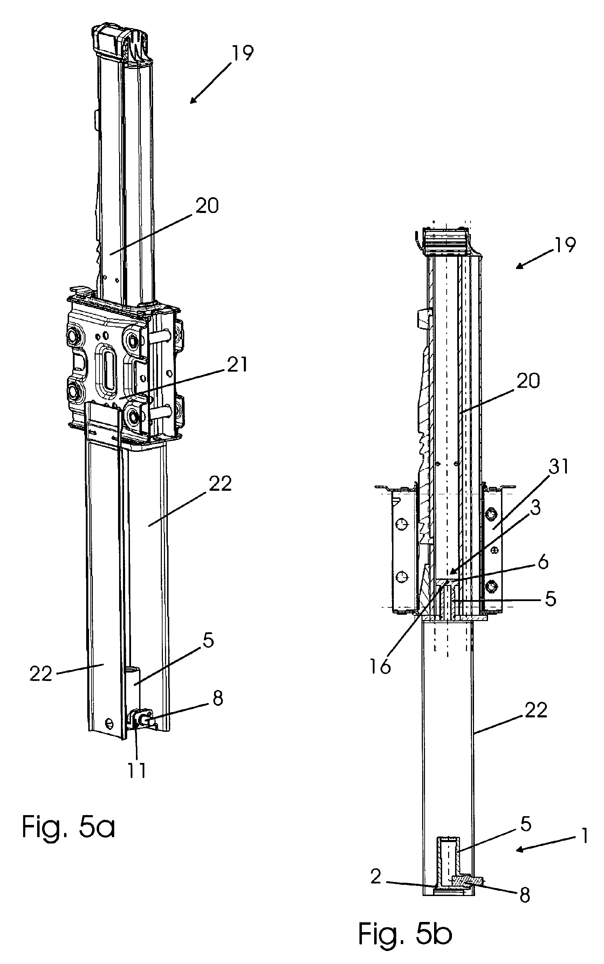

In Fig. 1 ist eine Überrollkörperantriebseinheit zur Verlagerung des in den Fig. 2 bis 5a dargestellten Überrollkörpers 20 aus der in den Fig. 4a und 5a dargestellten Lagerungsposition in die in den Fig. 4b und 5b dargestellte Überschlagsposition dargestellt.

Wesentliche Bauteile der Überrollkörperantriebseinheit 1 sind ein Gehäuse 2, ein in das Gehäuse 2 eingeschobener Antriebskörper 3 sowie ein in das Gehäuse 2 hineinragender Gasgenerator 8. Der Antriebskörper 3 weist einen zylindrisch ausgebildeten Kopplungsbereich 7 auf, mit dem der Antriebskörper 3 innerhalb eines entsprechend ausgebildeten zylindrischen Führungsabschnitt 5 des Gehäuses 2 angeordnet ist. Zur Verbindung des Antriebskörpers 3 mit dem Überrollkörper 20 weist der Antriebskörper 3 an seinem dem Kopplungsbereich 7 gegenüberliegenden Ende einen Verbindungsbereich 6 auf. Dieser weist zur Verbindung mit dem Überrollkörper 20 eine Gewindebohrung 16 auf, so dass der Antriebskörper 3 mit dem Überrollkörper 20 verschraubbar ist.

Der Kopplungsbereich 7 weist an seinem dem Verbindungsbereich 6 gegenüberliegenden Ende eine Nut 13 mit einem O-Ring 9 auf, durch den der Antriebskörper 3 gasdicht in dem Gehäuse 2 angeordnet ist. In einem dem O-Ring 9 gegenüberliegenden Bereich des Kopplungsbereichs 7 ist eine Nut 14 in den Kopplungsbereich 7 eingebracht, die in der eingeschobenen Lage des Antriebskörpers 3 im Bereich einer an der Innenseite des Führungsabschnitts 5 angeordneten Nut 15 angeordnet ist. Zur Lagesicherung des Antriebskörpers 3 ist in dessen montierter Lage an dem Führungsabschnitt 5 in den Nuten 14,15 ein Runddrahtsprengring 10 angeordnet, welcher formschlüssig mit beiden Nuten 14, 15 zusammenwirkt.

Die Überrollkörperantriebseinheit 1 weist in dem dem Verbindungsbereich 6 des Antriebskörpers 3 gegenüberliegenden Bereich einen Druckraum 4 auf, welcher somit zwischen dem Antriebskörper 3 und dem sich in das Gehäuse 2 erstreckenden Druckgenerator 8 angeordnet ist. Der Druckgenerator 8 ist einer Öffnung 12 des Gehäuses 2 durch ein Halteblech 11 fixiert. Eine Aktivierung des Gasgenerators 8 durch eine hier nicht dargestellte Sensorik für zu einer schlagartigen Druckerhöhung innerhalb des Druckraums 4 infolge dessen der Antriebskörper 3 schlagartig aus dem Führungsabschnitt 5 herausbefördert wird, wobei die Druckerhöhung ausreichend ist, um die durch den Runddrahtsprengring 10 hergestellte formschlüssige Verbindung aufzulösen.

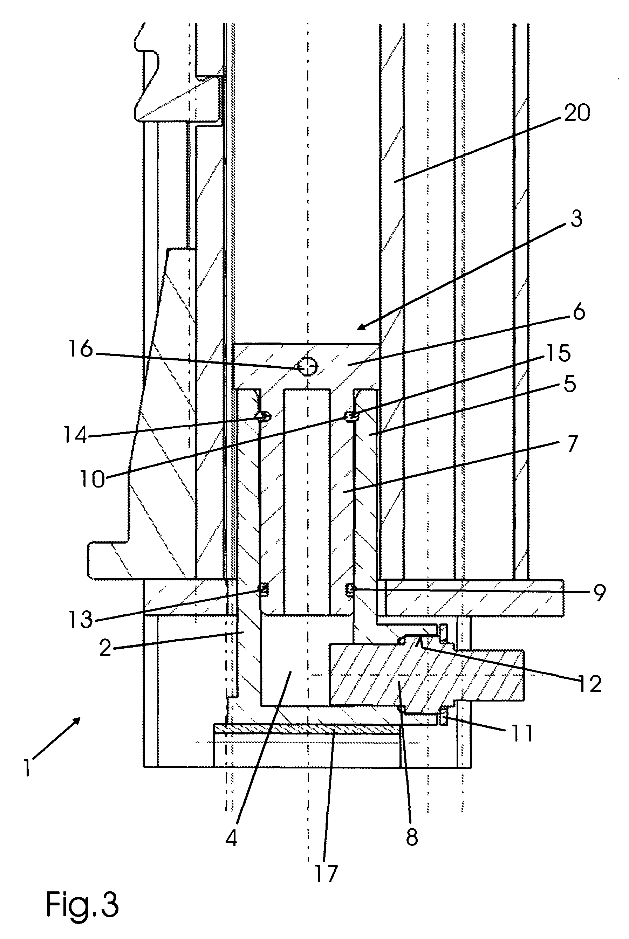

Wie in den in den Fig. 4a bis 5b dargestellten Überrollschutzsystemen 19 erkennbar ist die Überrollkörperantriebseinheit 1 in einen - bezogen auf die Einbaulage - unteres Ende der Überrollkörper 20 eingeschoben (vgl. auch Fig. 3). Die Überrollkörperantriebseinheit 1 ist über eine Bodenplatte 17 mit sich von einer Führungskassette 21 ausgehend erstreckenden Streben 22 verbunden, so dass die Überrollkörperantriebseinheit 1 gegenüber dem verstellbaren Überrollkörper 20 sowie in der Einbaulage des Überrollschutzsystems 19 am Fahrzeug lagefixiert ist. Eine Auslösung des Gasgenerators 8 bewirkt, wie bereits an obiger Stelle ausgeführt, eine Druckerhöhung im Druckraum 4, wodurch der Antriebskörper 3 in Folge seiner bestehenden Verbindung mit dem Überrollkörper 20 über den Verbindungsbereich 6 eine Verstellung des Überrollkörpers 20 ausgehend von der in den Fig. 4a und 4b dargestellten Lagerungsposition in die in den Fig. 5a und 5b dargestellten Überschlagsposition bewirkt. Die Länge des Führungsabschnitts 5 sowie des Kopplungsbereichs 7 und die Anordnung des O-Rings 9 an dem Kopplungsbereich 7 bestimmt die sich aus der Druckerhöhung ergebende Wirkungsdauer. Die Verbindung von Führungsabschnitt 5 und Kopplungsbereich 7 gewährleistet dabei eine zuverlässige, teilbeschleunigte Verlagerung des Überrollkörpers 20 aus der Lagerungsposition in die Überschlagsposition.

## Patentansprüche

1. Überrollkörperantriebseinheit (1) zur Verlagerung eines Überrollkörpers (20) aus einer Lagerungsposition in eine Überschlagsposition, mit
- einem einen Druckraum (4) aufweisenden Gehäuse (2) mit einem Führungsabschnitt (5),
- einem Antriebskörper (3) mit einem mit dem Überrollkörper (20) verbindbaren Verbindungsbereich (6) und einem an dem Führungsabschnitt (5) verschiebbar angeordneten Kopplungsbereich (7) und
- einem mit dem Druckraurn (4) in Wirkverbindung stehenden Gasgenerator (8),
wobei der Antriebskörper (3) im unteren Bereich des Überrollkörper (20) mit diesem verbunden ist und nach Auslösen des Gasgenerators (8) geführt durch den Führungsabschnitt (5) von dem Gehäuse (2) entfernt wird.

2. Überrollkörperantriebseinheitnach Anspruch 1, **dadurch gekennzeichnet, dass** der Kopplungsbereich (7) und der Führungsabschnitt(5) koaxial zueinander angeordnet sind.

3. Überrollkörperantriebseinheitnach Anspruch 1 oder 2, **gekennzeichnet durch** ein zwischen dem Kopplungsbereich (7) und dem Führungsabschnitt (5) angeordnetes, den Druckraum (4) abdichtendes Dichtelement (9), insbesondere einen O-Ring.

4. Überrollkörperantriebseinheit nach einem der vorhergehenden Ansprüche, **gekennzeichnet durch** ein formschlüssig mit dem Antriebskörper (3) und dem Gehäuse (2) in Eingriff befindliches Arretierungselement(10).

5. Überrollkörperantriebseinheit nach einem der vorhergehenden Ansprüche, **dadurch gekennzeichnet, dass** das Arretierungselementdurch einen in einer Nut (14) im Kopplungsbereich(7) und einer Nut (15) im Führungsabschnitt(5) angeordneten Runddrahtsprengring (10) gebildet ist.

6. Überrollkörperantriebseinheit nach einem der vorhergehenden Ansprüche, **dadurch gekennzeichnet, dass** der Kopplungsbereich (7) innerhalb des Führungsabschnitts (5) angeordnet ist.

7. Überrollkörperantriebseinheit nach einem der vorhergehenden Ansprüche, **dadurch gekennzeichnet, dass** der Führungsabschnitt (5) und der Kopplungsbereich (7) einen zylindrischen Querschnitt aufweisen, insbesondere als Hohlzylinder ausgebildet sind.

8. Überrollschatzsystem für Kraftfahrzeuge, mit
- einem zwischen einer Lagerungsposition und einer Überschlagsposition verstellbaren Überrollkörper und
- einer den Überrollkörper im Bedarfsfall aus der Lagerungsposition in die Überschlagsposition verstellenden Antriebseinheit,
**dadurch gekennzeichnet, dass**
die Antriebseinheit durch eine Überrollkörperantriebseinheit (1) gemäß einem der Ansprüche 1 bis 7 gebildet ist.

9. Überrollschutzsystem nach Anspruch 8, **dadurch gekennzeichnet, dass** der Verbindungsbereich (6) mit dem Überrollkörper (20) formschlüssig verbunden, insbesondere verschraubt ist.

10. Überrollschutzsystem nach Anspruch 8 oder 9, **dadurch gekennzeichnet, dass** der Führungsabschnitt (5) der Überrollkörperantriebseinheit (1) in ein unteres Ende des Überrollkörpers (20) eingeschoben ist.

11. Überrollschutzsystem nach einem der Ansprüche 8 bis 10, **dadurch gekennzeichnet, dass** der Überrollkörper (20) durch die Überrollkörperantriebseinheit (1) teilbeschleunigt aus der Lagerungsposition in die Überschlagsposition verstellbar ist.

## Claims

1. A rollover body drive unit (1) for displacing a rollover body (20) from a storage position into a rollover position, having
- a housing (2), having a pressure chamber (4), with a guide section (5),
- a drive body (3) having a connection region (6) connectable to the rollover body (20), and a coupling region (7) disposed movable on the guide section (5), and
- a gas generator (8) in operative connection with the pressure chamber (4),
wherein the drive body (3) is connected to the rollover body (20) in the lower region thereof, and after actuation of the gas generator (8) is displaced from the housing (2) by the guide section (5).

2. The rollover body drive unit according to claim 1, **characterized in that** the coupling region (7) and the guide section (5) are disposed coaxially to each other.

3. The rollover body drive unit according to claim 1 or 2, **characterized by** a sealing element (9), particularly an O-ring, disposed between the coupling region (7) and the guide section (5), sealing the pressure chamber (4).

4. The rollover body drive unit according to one of the preceding claims, **characterized by** an arresting element (10) being in form-locking engagement with the drive body (3) and the housing (2).

5. The rollover body drive unit according to one of the preceding claims, **characterized in that** the arresting element is formed by a circular wire snap ring (10) disposed in a groove (14) in the coupling region (7) and a groove (15) in the guide section (5).

6. The rollover body drive unit according to one of the preceding claims, **characterized in that** the coupling region (7) is disposed inside the guide section (5).

7. The rollover body drive unit according to one of the preceding claims, **characterized in that** the guide section (5) and the coupling region (7) are formed particularly as a hollow cylinder having a cylindrical cross-section.

8. A rollover protection system for motor vehicles, with
- a rollover body movable between a storage position and a rollover position, and
- a drive unit moving the rollover body in case of need from the storage position into the rollover position,
**characterized in that**
the drive unit is formed by a rollover body drive unit (1) according to one of the claims 1 to 7.

9. The rollover protection system according to claim 8, **characterized in that** the connection section (6) is connected, particularly screwed, to the rollover body (20) in a form-locking manner.

10. The rollover protection system according to claim 8 or 9, **characterized in that** the guide section (5) of the rollover body drive unit (1) is slid into a lower end of the rollover body (20).

11. The rollover protection system according to one of the claims 8 to 10, **characterized in that** the rollover body (20) is movable from the storage position into the rollover position accelerated to some extent by the rollover body drive unit (1).

## Revendications

1. Unité d'entraînement de corps de protection contre les tonneaux (1) pour le logement d'un corps de protection contre les tonneaux (20) à partir d'une position de logement dans une position de renversement, comprenant
- une carcasse (2) présentant un espace sous pression (4) avec une section de guidage (5),
- un corps d'entraînement (3) avec une région de connexion (6) pouvant être connectée au corps de protection contre les tonneaux (20) et une région d'accouplement (7) disposée de manière à pouvoir coulisser sur la section de guidage (5), et
- un générateur gazeux (8) se trouvant en connexion active avec l'espace sous pression (4),
dans laquelle le corps d'entraînement (3) est relié au corps de protection contre les tonneaux (20) dans la région inférieure de celui-ci et est éloigné de la carcasse (2) après déclenchement du générateur gazeux (8) en étant guidé à travers la section de guidage (5).

2. Unité d'entraînement de corps de protection contre les tonneaux selon la revendication 1, **caractérisée en ce que** la région d'accouplement (7) et la section de guidage (5) sont disposées de manière coaxiale l'une par rapport à l'autre.

3. Unité d'entraînement de corps de protection contre les tonneaux selon la revendication 1 ou 2, **caractérisée par** un élément d'étanchéité (9), notamment un joint torique, disposé entre la région d'accouplement (7) et la section de guidage (5), étanchéifiant l'espace sous pression (4).

4. Unité d'entraînement de corps de protection contre les tonneaux selon l'une quelconque des revendications précédentes, **caractérisée par** un élément de blocage (10) se trouvant en engagement par conjugaison de formes avec le corps d'entraînement (3) et la carcasse (2).

5. Unité d'entraînement de corps de protection contre les tonneaux selon l'une quelconque des revendications précédentes, **caractérisée en ce que** l'élément de blocage est formé par un jonc à fil de section circulaire (10) disposé dans une rainure (14) dans la région d'accouplement (7) et une rainure (15) dans la section de guidage (5).

6. Unité d'entraînement de corps de protection contre les tonneaux selon l'une quelconque des revendications précédentes, **caractérisée en ce que** la région d'accouplement (7) est disposée au sein de la section de guidage (5).

7. Unité d'entraînement de corps de protection contre les tonneaux selon l'une quelconque des revendications précédentes, **caractérisée en ce que** la section de guidage (5) et la région d'accouplement (7) présentent une section transversale cylindrique, notamment sont réalisées en tant que cylindre creux.

8. Système de protection contre les tonneaux pour véhicules automobiles, comprenant
- un corps de protection contre les tonneaux pouvant être déplacé entre une position de logement et une position de renversement, et
- une unité d'entraînement déplaçant le corps de protection contre les tonneaux en cas de besoin de la position de logement dans la position de renversement,
**caractérisé en ce que**
l'unité d'entraînement est formée par une unité d'entraînement de corps de protection contre les tonneaux (1) selon l'une quelconque des revendications 1 à 7.

9. Système de protection contre les tonneaux selon la revendication 8, **caractérisé en ce que** la région de connexion (6) est reliée par conjugaison de formes au corps de protection contre les tonneaux (20), notamment est vissée.

10. Système de protection contre les tonneaux selon la revendication 8 ou 9, **caractérisé en ce que** la section de guidage (5) de l'unité d'entraînement de corps de protection contre les tonneaux (1) est insérée dans une extrémité inférieure du corps de protection contre les tonneaux (20).

11. Système de protection contre les tonneaux selon l'une quelconque des revendications 8 à 10, **caractérisé en ce que** le corps de protection contre les tonneaux (20) peut être déplacé par l'unité d'entraînement de corps de protection contre les tonneaux (1) de manière partiellement accélérée de la position de logement dans la position de renversement.
